# EUROPÄISCHE PATENTSCHRIFT

(11) **EP 3 495 096 B1**
(45) Veröffentlichungstag und Bekanntmachung des Hinweises auf die Patenterteilung: **09.09.2020**
(21) Anmeldenummer: 18210118.8
(22) Anmeldetag: 04.12.2018
(51) Int. Cl.: B25J 9/04, B25J 9/10, B25J 9/16, B25J 19/02, B65G 1/04, B65G 1/137, G06Q 10/08

(54) **MOBILER KOMMISSIONIERROBOTER UND VERFAHREN ZU SEINEM BETRIEB**
MOBILE PICKING ROBOT AND METHOD FOR OPERATING SAME
ROBOT DE PRÉPARATION DE COMMANDES MOBILE ET SON PROCÉDÉ DE FONCTIONNEMENT

(30) Priorität: 11.12.2017 DE 102017129464
(43) Veröffentlichungstag der Anmeldung: 12.06.2019
(73) Patentinhaber: Linde Material Handling GmbH, 63743 Aschaffenburg (DE)
(72) Erfinder: PAWLOWSKY, Mathias, 82131 Stockdorf (DE); KRUMBHOLZ, Peter, 63869 Jakobsthal (DE)
(74) Vertreter: Patentship Patentanwaltsgesellschaft mbH

(56) Entgegenhaltungen:
- DE-A1- 3 524 666
- DE-A1-102009 038 487
- JP-A- H0 294 157
- US-A- 3 007 097
- US-A- 4 411 577
- US-A- 5 790 338

## Beschreibung

Die Erfindung betrifft ein Verfahren zum Betreiben eines mobilen Kommissionierroboters zur automatischen Kommissionierung von Objekten, wobei der Kommissionierroboter einen vertikal ausgerichteten Mast und einen daran angebrachten horizontal ausgerichteten Roboterarm mit einem Aufnahmewerkzeug zur Aufnahme des Objekts und einer am Aufnahmewerkzeug angeordneten Kontaktstelle zur Kontaktierung des Objekts aufweist, und wobei mit mindestens einem Sensor Daten zur Position des Aufnahmewerkzeugs erfasst werden und nach Auswertung der Daten in einer Datenverarbeitungseinrichtung Antriebe zur Verstellung des Roboterarms in vertikaler Richtung (z) axial zum Mast, zur Drehung des Roboterarms in einer horizontalen Ebene in Rotationsrichtung (x) um die Achse des Mastes und zum Ausfahren des Roboterarms in radialer Richtung (y) so angesteuert werden, dass zumindest eine Grobpositionierung des Aufnahmewerkzeugs in Nähe des Objekts durchgeführt wird, wobei mit mindestens einem optischen Sensor Daten zur Position der Kontaktstelle des Aufnahmewerkzeugs erfasst werden und nach Auswertung der Daten in der Datenverarbeitungseinrichtung zumindest der Antrieb zur Verstellung des Roboterarms in vertikaler Richtung so angesteuert wird, dass eine Feinpositionierung der Kontaktstelle durchgeführt wird.

Ein gattungsgemäßes Verfahren zum Betrieben eines mobilen Kommissionierroboters ist aus der US 5 790 338 A bekannt. Die US 5 790 338 A offenbart ein gattungsgemäßes Verfahren zum Betrieben eines schienengeführten Regalroboters zum automatischen Kommissionieren von Objekten, bei dem an einem vertikal ausgerichteten Mast ein als Manipulator ausgebildeter horizontal ausgerichteter Roboterarm mit einem als Hand ausgebildeten Aufnahmewerkzeug zur Aufnahme von Objekten angeordnet ist. Das Aufnahmewerkzeug weist hierbei eine Kontaktstelle zur Kontaktierung des Objekts auf. Mittels eines Sensors (motor encoder) an dem Antrieb wird eine Grobpositionierung des Aufnahmewerkzeugs durchgeführt. Hierbei werden mit dem Sensor (motor encoder) Daten zur Position des Aufnahmewerkzeugs erfasst und nach Auswertung der Daten in einer Datenverarbeitungseinrichtung Antriebe zur Verstellung des Roboterarms in vertikaler Richtung axial zum Mast, zur Drehung des Roboterarms in einer horizontalen Ebene in Rotationsrichtung um die Achse des Mastes und zum Ausfahren des Roboterarms in radialer Richtung derart angesteuert, dass zumindest eine Grobpositionierung des Aufnahmewerkzeugs in Nähe des Objekts durchgeführt wird. Eine Feinpositionierung des Aufnahmewerkzeugs erfolgt mittels eines optischen Sensors, der als Reflexionsphotosensor ausgebildet ist und am Roboterarm nahe des Aufnahmewerkzeugs angeordnet ist.

Unter Kommissionierung versteht man alle Methoden zur Zusammenstellung von bestimmten Objekten, insbesondere von Gütern, in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt vollautomatische Systeme eingesetzt. Dabei werden z.B. Handelsgüter von autonom betriebenen Transportfahrzeugen von einer Quellposition aufgenommen und auf einer auf dem Fahrzeug transportierten Zielpalette abgesetzt. Insbesondere werden hierzu mobile Kommissionierroboter verwendet, die die Handelsgüter selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen und handhaben. Das Aufnahmewerkzeug kann beispielsweise als Adhäsionsgreifer oder Vakuumgreifer ausgebildet sein. Über entsprechende Kontaktstellen wird der direkte Kontakt von dem Aufnahmewerkzeug zu dem aufzunehmenden Objekt hergestellt. Bei Adhäsionsgreifern handelt es sich bei der Kontaktstelle z.B. um eine Klebefolie, bei Vakuumgreifern um einen Sauger. Diese Kontaktstelle muss präzise am Objekt positioniert werden.

An mobile Kommissionierroboter werden hohe Anforderungen gestellt:
So sollen Roboterarme verwendet werden, die möglichst in Leichtbauweise hergestellt sind. Aufgrund von Bauraumeinschränkungen, Energieverbrauchsvorgaben und Zykluszeiten ist häufig die Verwendung eines möglichst dünnen, leichten Roboterarms erwünscht.

Bekannt sind zylindrische Roboterarme, bei denen die Hauptachsen aus zwei translatorischen Achsen und einer rotatorischen Gelenkachse bestehen. Die drei Hauptachsen sind so angeordnet, dass durch sie ein zylindrisches Koordinatensystem aufgespannt wird. Zylindrische Roboterarme sind für Palettier- und Depalettieraufgaben gut geeignet. Da sich der gesamte Roboterarm in einer Ebene befindet, können Kollisionen mit Produkten auf der Palette effizienter vermieden werden. Dies vereinfacht die Bahnplanung. Außerdem ist der Betrieb sehr energieeffizient, da die Roboterarmglieder beim Verfahren in einer Ebene bleiben.

Um den bei Kommissioniervorgängen üblichen gesamten Arbeitsbereich abdecken zu können, ist als Reichweite des Roboterarms eine Roboterarmlänge von ca. 2 m erforderlich. Zylindrische Roboterarme mit dieser Reichweite sind aber nicht auf dem Markt bekannt.

Aus diesen Anforderungen resultieren folgende Probleme:
Roboterarme in Leichtbauweise haben eine geringe Steifigkeit und schwingen daher, was eine präzise Positionierung der Kontaktstelle des Aufnahmewerkzeugs anspruchsvoll macht. Dieses Problem wird bei langen Roboterarmen verschärft. Das Schwingen des Roboterarms muss erst ausreichend ausklingen, bevor mit der Kontaktierung und Manipulation des Objekts begonnen werden kann. Dadurch steigt die Zykluszeit und die Rentabilität des mobilen Kommissionierroboters sinkt.

Zudem biegt sich der Roboterarm abhängig von Eigengewicht, Objektgewicht und Ausrichtung des Roboterarms statisch durch (Längs- und Querachse). Dies erschwert die Positionierung der Kontaktstelle des Aufnahmewerkzeugs relativ zum Objekt.

Nach erfolgreicher Kontaktaufnahme zum Objekt soll durch Anheben des Objekts ein Spalt zwischen Objekt und Unterlage erzeugt werden, um eine Haltevorrichtung unter das Objekt zu schieben. Durch das zusätzliche Gewicht des Objekts biegt sich der Roboterarm beim Hochfahren zunächst stärker durch und es entsteht kein Spalt zu Beginn des Verfahrvorgangs. Es fehlt dann die Rückmeldung, wann der Spalt offen ist und mit dem Untergreifvorgang mittels der Haltevorrichtung begonnen werden kann. Gleichzeitig darf das Objekt nicht zu stark gehoben werden, weil dann die Hebekräfte zu stark ansteigen würden und damit das Objekt oder dessen Umverpackung beschädigt würde oder der Kontakt zwischen dem als Greifer ausgebildeten Aufnahmewerkzeug und Objekt abreißen würde.

Nach dem Stand der Technik wird versucht, diese Anforderungen durch folgende Maßnahmen zu erfüllen:
Es wurde bereits vorgeschlagen, mittels einer Kamera ein markantes Merkmal der Umgebung zu erfassen und daraus Bewegungen zu erkennen. Diese Methode eignet sich aber nicht für mobile Kommissionierroboter, da sich die Umgebung ständig verändert.

Mittels Beschleunigungssensoren oder Dehnungsmessstreifen lassen sich zwar Schwingungen erkennen, nicht aber die Position relativ zum aufzunehmenden Objekt.

Auch die Verwendung von Sensordaten aus dem Antriebsmotor des Mastes stellt sich als ungenügend heraus. Insbesondere bei zylindrischen Roboterarmen befindet sich nämlich zwischen der Messstelle am Antriebsmotor des Mastes und der relevanten vertikalen Position der Kontaktstelle des Aufnahmewerkzeugs die gesamte horizontale Länge des Roboterarms, durch dessen Elastizität das Messergebnis verfälscht wird. Daher eignen sich die Sensordaten aus dem Antriebsmotor nicht für eine exakte Bestimmung der Positionierung der Kontaktstelle des Aufnahmewerkzeugs.

Der vorliegenden Erfindung liegt die Aufgabe zugrunde, ein Verfahren der eingangs genannten Art so auszugestalten, dass eine präzise Positionierung der Kontaktstelle des Aufnahmewerkzeugs am Objekt ermöglicht wird.

Diese Aufgabe wird erfindungsgemäß dadurch gelöst, dass die Datenverarbeitungseinrichtung mittels Bildkorrelation aus den Daten des optischen Sensors eine Geschwindigkeitsbestimmung und/oder Schwingungserkennung durchführt und Mechanismen zur Schwingungskompensation und/oder zur Verkürzung der Ausschwingzeit ansteuert.

Der Erfindung liegt die Erkenntnis zugrunde, dass das Aufnahmewerkzeug des Roboterarms zwar mittels herkömmlicher Sensoren, z.B. Winkelsensoren an den Antrieben, in x- Richtung und y- Richtung positioniert werden kann. Auch die Positionierung in z- Richtung kann mithilfe eines Sensors im Mastantrieb grob angefahren werden. Da sich aber der Roboterarm statisch durchbiegt und schwingt, sind die Sensordaten aus dem Mastantrieb nicht ausreichend, um die Position des Aufnahmewerkzeugs in z- Richtung am Ende des Roboterarms mit ausreichender Genauigkeit sicherzustellen. Daher sieht die Erfindung eine Erweiterung dieses Sensorkonzepts um einen optischen Sensor vor, der die genaue Position der Kontaktstelle des Aufnahmewerkzeugs erfasst.

Als optischer Sensor wird zweckmäßigerweise eine Kamera, insbesondere eine monokulare 2-D Kamera, verwendet. Bevorzugt ist der optische Sensor im Bereich des Aufnahmewerkzeugs oder am vorderen Ende des Roboterarms vorgesehen. Auf diese Weise schwingt der optische Sensor mit dem Roboterarm mit, so dass der optische Sensor die Relativbewegung zwischen dem schwingenden Sensor bzw. Roboterarm und dem feststehenden Objekt erfassen kann.

Erfindungsgemäß führt die Datenverarbeitungseinrichtung mittels Bildkorrelation aus den Daten des optischen Sensors eine Geschwindigkeitsbestimmung und/oder Schwingungserkennung durch und steuert Mechanismen zur Schwingungskompensation und/oder zur Verkürzung der Ausschwingzeit an. Beispielsweise können die Schwingungen durch gezielte Ansteuerung des Mastantriebs und/oder der weiteren Antriebe kompensiert werden. Es kann auch der Fahrbetrieb des Kommissionierroboters angehalten werden, bis die Schwingungen unter ein kritisches Maß abgeklungen sind.

Eine weitere vorteilhafte Ausführungsform der Erfindung sieht vor, dass die Datenverarbeitungseinrichtung aus den Daten des optischen Sensors mittels Bilderkennung eine Abstandsmessung zwischen Ist-Position und Soll-Position der Kontaktstelle durchführt. Auf diese Weise kann der relative Abstand der Kontaktstelle zur gewünschten Position (in z-Richtung) bestimmt werden (z.B. in einer Höhe von 2 cm über der unteren Objektkante). Die Verwendung des optischen Sensors erlaubt eine direkte Messung dieser Regelgröße. Dazu muss das zu greifende Objekt detektiert werden. Entsprechende Algorithmen auf Basis von 2-D-oder 3-D-Bildern sind bekannt.

Gemäß einer Weiterbildung des Erfindungsgedankens erkennt die Datenverarbeitungseinrichtung aus den Daten des optischen Sensors ein Anheben des Objekts und einen Spalt zwischen Objekt und Unterlage. Auf diese Weise kann die Spalterzeugung überwacht werden, um die Prozesssicherheit für das Einschieben einer Haltevorrichtung unter das Objekt zu erhöhen. Dabei kann das Anheben des Objekts mittels Bilderkennung aus den Daten des optischen Sensors erkannt werden. Eine andere Möglichkeit besteht darin, dass der optische Sensor auf eine Unterlage des Objektes gerichtet ist (zum Beispiel auf ein darunter stehendes Objekt oder eine Palette). In diesem Fall kann die Spalterzeugung dadurch erkannt werden, dass eine relative Bewegung zur Unterlage gemessen wird (Feature Tracking).

Gemäß einer Weiterbildung der Erfindung wird nach dem Erreichen einer gewünschten Spaltgröße ein Signal ausgegeben, um ein Einschieben einer Haltevorrichtung unter das Objekt zu starten.

Eine andere Variante der Erfindung sieht vor, dass ein Projektor im Bereich des Aufnahmewerkzeugs am Roboterarm vorgesehen ist. Der Projektor projiziert eine Zielmarkierung auf das Objekt. Die Zielmarkierung wird vom optischen Sensor erfasst. Als Projektor kann zum Beispiel ein Laser, ein LED-Strahler oder ein Infrarotstrahler verwendet werden. Im Falle eines Infrarotstrahls wird als optischer Sensor bevorzugt eine Infrarotkamera eingesetzt. Der Projektor wird zweckmäßigerweise in Nähe des Aufnahmewerkzeugs angebracht, sodass er in gleicher Weise wie dieser schwingt. Zur Detektion der projizierten Zielmarkierung kann auch eine eventuell zu anderen Zwecken am Kommissionierroboter befestigte Kamera benutzt werden. Die Kamera ist vorteilhafterweise an einem nicht schwingenden Teil des Kommissionierroboters angeordnet, d.h. außerhalb des Roboterarms.

Der optische Sensor kann auch dazu verwendet werden, um horizontale Bewegungen und relative Abstände, Drehbewegungen und Verdrehungen sowie radiale Bewegungen zu messen und entsprechende Schwingungen zu erkennen.

Die Erfindung betrifft ferner einen mobilen Kommissionierroboter zur automatischen Kommissionierung von Objekten mit einem vertikal ausgerichteten Mast und einem daran angebrachten horizontal ausgerichteten Roboterarm mit einem Aufnahmewerkzeug zur Aufnahme des Objekts und einer am Aufnahmewerkzeug angeordneten Kontaktstelle zur Kontaktierung des Objekts, wobei der Roboterarm in vertikaler Richtung (z) axial zum Mast höhenverstellbar, in einer horizontalen Ebene in Rotationsrichtung (x) um die Achse des Mastes drehbar und in radialer Richtung (y) ausfahrbar ausgestaltet ist, und mindestens ein Sensor zur Bestimmung der Position des Aufnahmewerkzeugs vorgesehen ist, welcher mit mindestens einer Datenverarbeitungseinrichtung und Antrieben zur Ausrichtung des Roboterarms in die Richtungen (x,y,z) in Wirkverbindung steht, wobei der mindestens eine Sensor zumindest für eine Grobpositionierung des Aufnahmewerkzeugs in Nähe des Objekts ausgelegt ist, wobei der Kommissionierroboter einen optischen Sensor zur Bestimmung der Position der Kontaktstelle aufweist und der optische Sensor mit der Datenverarbeitungseinrichtung und den Antrieben in Wirkverbindung steht und für eine Feinpositionierung der Kontaktstelle ausgelegt ist.

Bei einem solchen mobilen Kommissionierroboter wird die gestellte Aufgabe dadurch gelöst, dass die Datenverarbeitungseinrichtung ein erfindungsgemäßes Verfahren durchführt.

Zweckmäßigerweise ist der optische Sensor im Bereich des Aufnahmewerkzeugs des Roboterarms angebracht. Auf diese Weise schwingt der optische Sensor mit dem Roboterarm mit, so dass der optische Sensor die Relativbewegung zwischen Sensor bzw. Roboterarm und Objekt erfassen kann.

Bevorzugt ist der optische Sensor als Kamera ausgebildet.

Zusätzlich oder alternativ zur Anbringung des optischen Sensors am Roboterarm kann im Bereich des Aufnahmewerkzeugs des Roboterarms ein Projektor angebracht sein, der zur Projektion einer Zielmarkierung auf das Objekt ausgebildet ist. Der optische Sensor ist in diesem Fall bevorzugt an einem Teil des Kommissionierroboters angebracht, der nicht mit dem Roboterarm mitschwingen kann, insbesondere an einem schwingungsmäßig von Roboterarm und Mast entkoppelten Apparateteil. Außerdem ist in diesem Fall der optische Sensor zur Erfassung dieser Zielmarkierung ausgebildet.

Die Erfindung weist eine ganze Reihe von Vorteilen auf:
Der optische Sensor ermöglicht die direkte Bestimmung der Ausrichtung der Kontaktstelle des Aufnahmewerkzeugs und der Position der Kontaktstelle des Aufnahmewerkzeugs relativ zum Objekt. Diese Erfassung kann auch fortlaufend und in Echtzeit erfolgen, wodurch weiterhin Schwingungen des Roboterarms erkannt werden können.

Durch die Verwendung des optischen Sensors können drei Probleme gleichzeitig behoben werden: Schwingungen des Roboterarms können erkannt werden und durch entsprechende Steuerung des Mastantriebs im Falle von vertikalen Schwingungen sowie gegebenenfalls der weiteren Antriebe (Antrieb zur Drehung des Roboterarms und Antrieb zum Ausfahren des Roboterarms) kompensiert werden. Eine präzise Positionierung der Kontaktstelle des Aufnahmewerkzeugs zum Objekt wird auch bei starker statischer Biegung des Roboterarms ermöglicht. Schließlich ist auch eine sichere Überwachung der Spalterzeugung zwischen Objekt und Unterlage gewährleistet. Da alle drei Anforderungen durch einen gemeinsamen Sensor erfüllt werden, können Investitionskosten gespart werden.

Die erfindungsgemäße sensorische Trennung von Grobpositionierung mittels bekannter Sensortechnik und Feinpositionierung mittels des optischen Sensors hat auch verschiedene Vorteile gegenüber Systemen, die eine Positionierung ausschließlich mithilfe einer Kamera durchführen: Da aufgrund der Grobpositionierung mittels der herkömmlichen Sensortechnik die x-und y-Position des optischen Sensors bereits bekannt sind, kann der Abstand zum Objekt bei bekannter Umgebung bestimmt werden. Außerdem wird der optische Sensor nur benötigt, wenn sich die Kontaktstelle des Aufnahmewerkzeugs bereits in grober Näherung vor dem Objekt befindet. Dies erleichtert die Verwendung von Verfahren zur Bildkorrelation, da ein kleiner Abstand zum Objekt vorausgesetzt werden kann und daher die Textur erkennbar ist. Bei reiner Verwendung einer Kameratechnik zur gesamten Positionierung des Kommissionierroboters müsste sich der Kommissionierroboter auch orientieren können, wenn das nächste Objekt weit entfernt ist.

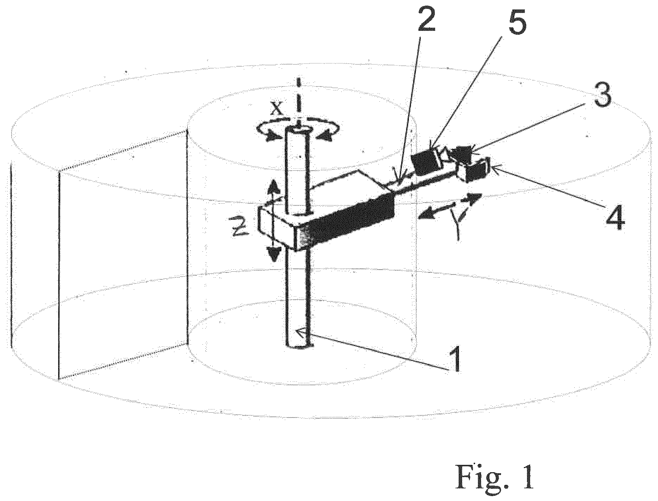

Weitere Vorteile und Einzelheiten der Erfindung werden anhand des in der schematischen Figur dargestellten Ausführungsbeispiels näher erläutert. Hierbei zeigt
- Figur 1: einen Mast mit einem zylindrischen Roboterarm eines erfindungsgemäßen Kommissionierroboters.

In der Figur 1 ist ein Mast 1 und ein zylindrischer Roboterarm 2 eines erfindungsgemäßen Kommissionierroboters dargestellt, bei dem die Hauptachsen aus zwei translatorischen Achsen y, z und einer rotatorischen Gelenkachse x bestehen. Die drei Hauptachsen sind so angeordnet, dass sie ein zylindrisches Koordinatensystem x, y, z aufspannen.

Der Mast 1 ist als vertikal ausgerichteter Mast 1 ausgebildet und weist einen daran angebrachten horizontal ausgerichteten Roboterarm 2 mit einem Aufnahmewerkzeug 3 zur Aufnahme des Objekts und einer am Aufnahmewerkzeug 3 angeordneten Kontaktstelle 4 zur Kontaktierung des Objekts auf.

Der Roboterarm 2 ist in vertikaler Richtung z axial zum Mast 1 höhenverstellbar.

Zusätzlich ist der Roboterarm 2 in einer horizontalen Ebene in Rotationsrichtung x um die Achse des Mastes 1 drehbar und in radialer Richtung y ausfahrbar.

Der Mast 1 ist an dem in der Figur 1 nicht näher dargestellten fahrbaren Chassis des mobilen Kommissionierroboters angeordnet.

Am Roboterarm 2 ist in Nähe des Aufnahmewerkzeugs 3 ein als Kamera ausgebildeter optischer Sensor 5 angebracht. Dieser ist mit einer in der Figur nicht dargestellten Datenverarbeitungseinrichtung des Kommissionierroboters verbunden, welche die ebenfalls in der Figur nicht dargestellten Antriebe zur Ausrichtung des Roboterarms 2 in die Richtungen x, y, z ansteuert.

Der optische Sensor 5 sieht bevorzugt einerseits das Aufnahmewerkzeug 3 sowie die Kontaktstelle 4 und andererseits das vom Aufnahmewerkzeug 3 aufzunehmende Objekt, das in der Figur 1 nicht dargestellt ist. Es ist jedoch nicht zwingend erforderlich, dass das Aufnahmewerkzeug 3 sowie die Kontaktstelle 4 im Sichtfeld des optischen Sensors 5 liegen. Durch die örtliche Nähe kann gleiches Schwingungsverhalten vorausgesetzt werden. Aus den erfassten Daten des optischen Sensors 5 kann mittels der Datenverarbeitungseinrichtung die Relativbewegung zwischen der Kontaktstelle 4 und dem Objekt errechnet werden. Somit können Schwingungen erkannt und durch gezielte Ansteuerung des Antriebs bzw. der Antriebe des Mastes 1 kompensiert werden. Weiterhin ermöglicht der optische Sensor 5 eine präzise Fein-Positionierung der Kontaktstelle 4 des Aufnahmewerkzeugs 3 zum aufzunehmenden Objekt auch bei statischer Biegung des Roboterarms 2. Weiterhin ermöglicht der optische Sensor 5 nach der Aufnahme des Objekts mit dem Aufnahmewerkzeug 3 eine sichere Überwachung der Spalterzeugung zwischen Objekt und Unterlage.

Zur Erreichung der Positionierung der Kontaktstelle 4 zum Objekt verwendet die Datenverarbeitungseinrichtung eine Bildkorrelation.

Hierbei erfolgt ein Abgleich der Daten des Sensors 5 mit einem in der Datenverarbeitungseinrichtung des Kommissionierroboters hinterlegten Bild des aufzunehmenden Objekts. Das Bild des aufzunehmenden Objekts wird in der Intralogistik in den Materialstammdaten gepflegt und verwaltet und der Datenverarbeitungseinrichtung des Kommissionierroboters bei Auftragserteilung übermittelt.

Zusätzlich können auch folgende andere Verfahren verwendet werden.

### b) Bildverarbeitungssoftware

Mit einer Bildverarbeitungssoftware werden die Kanten des aufzunehmenden Objekts erkannt. Hierzu kann die Ausführung des optischen Sensors als 3D-Kamera sinnvoll sein.

### c) Feature Tracking

Sofern nur Schwingungen detektiert werden, kann das relativ einfache Feature Tracking verwendet werden. Dabei wird die Textur der Objektoberfläche als Erkennungsmerkmal genutzt. Dies ermöglicht einen Einsatz auf allen Oberflächen, wobei kein Vorwissen aus den Stammdaten des Objekts erforderlich ist.

## Patentansprüche

1. Verfahren zum Betreiben eines mobilen Kommissionierroboters zur automatischen Kommissionierung von Objekten, wobei der Kommissionierroboter einen vertikal ausgerichteten Mast (1) und einen daran angebrachten horizontal ausgerichteten Roboterarm (2) mit einem Aufnahmewerkzeug (3) zur Aufnahme des Objekts und einer am Aufnahmewerkzeug (3) angeordneten Kontaktstelle (4) zur Kontaktierung des Objekts aufweist, und wobei mit mindestens einem Sensor Daten zur Position des Aufnahmewerkzeugs (3) erfasst werden und nach Auswertung der Daten in einer Datenverarbeitungseinrichtung Antriebe zur Verstellung des Roboterarms (2) in vertikaler Richtung (z) axial zum Mast (1), zur Drehung des Roboterarms (2) in einer horizontalen Ebene in Rotationsrichtung (x) um die Achse des Mastes (1) und zum Ausfahren des Roboterarms (2) in radialer Richtung (y) so angesteuert werden, dass zumindest eine Grobpositionierung des Aufnahmewerkzeugs (3) in Nähe des Objekts durchgeführt wird, wobei mit mindestens einem optischen Sensor (5) Daten zur Position der Kontaktstelle (4) des Aufnahmewerkzeugs (3) erfasst werden und nach Auswertung der Daten in der Datenverarbeitungseinrichtung zumindest der Antrieb zur Verstellung des Roboterarms (2) in vertikaler Richtung (z) so angesteuert wird, dass eine Feinpositionierung der Kontaktstelle (4) durchgeführt wird, **dadurch gekennzeichnet, dass** die Datenverarbeitungseinrichtung aus den Daten des optischen Sensors (5) mittels Bildkorrelation eine Geschwindigkeitsbestimmung und/oder Schwingungserkennung durchführt und Mechanismen zur Schwingungskompensation und/oder zur Verkürzung der Ausschwingzeit ansteuert.

2. Verfahren nach Anspruch 1, **dadurch gekennzeichnet, dass** die Datenverarbeitungseinrichtung aus den Daten des optischen Sensors (5) mittels Bilderkennung eine Abstandsmessung zwischen Ist-Position und Soll-Position der Kontaktstelle (4) durchführt.

3. Verfahren nach Anspruch 1 oder 2, **dadurch gekennzeichnet, dass** die Datenverarbeitungseinrichtung aus den Daten des optischen Sensors (5) ein Anheben des Objekts und einen Spalt zwischen Objekt und Unterlage erkennt.

4. Verfahren nach Anspruch 3, **dadurch gekennzeichnet, dass** nach dem Erreichen einer gewünschten Spaltgröße ein Signal ausgegeben wird, um ein Einschieben einer Haltevorrichtung unter das Objekt zu starten.

5. Verfahren nach einem der Ansprüche 1 bis 4, **dadurch gekennzeichnet, dass** als optischer Sensor (5) eine Kamera verwendet wird.

6. Verfahren nach einem der Ansprüche 1 bis 5, **dadurch gekennzeichnet, dass** ein Projektor im Bereich des Aufnahmewerkzeugs (3) am Roboterarm (2) vorgesehen ist und der Projektor eine Zielmarkierung auf das Objekt projiziert und die Zielmarkierung vom optischen Sensor (5) erfasst wird.

7. Mobiler Kommissionierroboter zur automatischen Kommissionierung von Objekten mit einem vertikal ausgerichteten Mast (1) und einem daran angebrachten horizontal ausgerichteten Roboterarm (2) mit einem Aufnahmewerkzeug (3) zur Aufnahme des Objekts und einer am Aufnahmewerkzeug (3) angeordneten Kontaktstelle (4) zur Kontaktierung des Objekts, wobei der Roboterarm (2) in vertikaler Richtung (z) axial zum Mast (1) höhenverstellbar, in einer horizontalen Ebene in Rotationsrichtung (x) um die Achse des Mastes (1) drehbar und in radialer Richtung (y) ausfahrbar ausgestaltet ist, und mindestens ein Sensor zur Bestimmung der Position des Aufnahmewerkzeugs (3) vorgesehen ist, welcher mit mindestens einer Datenverarbeitungseinrichtung und Antrieben zur Ausrichtung des Roboterarms in die Richtungen (x,y,z) in Wirkverbindung steht, wobei der mindestens eine Sensor zumindest für eine Grobpositionierung des Aufnahmewerkzeugs (3) in Nähe des Objekts ausgelegt ist, wobei der Kommissionierroboter einen optischen Sensor (5) zur Bestimmung der Position der Kontaktstelle (4) aufweist und der optische Sensor (5) mit der Datenverarbeitungseinrichtung und den Antrieben in Wirkverbindung steht und für eine Feinpositionierung der Kontaktstelle (4) ausgelegt ist, **dadurch gekennzeichnet, dass** die Datenverarbeitungseinrichtung ein Verfahren nach einem der Ansprüche 1 bis 6 durchführt.

8. Mobiler Kommissionierroboter nach Anspruch 7, **dadurch gekennzeichnet, dass** der optische Sensor (5) im Bereich des Aufnahmewerkzeugs (3) des Roboterarms (2) angebracht ist.

9. Mobiler Kommissionierroboter nach Anspruch 7 oder 8, **dadurch gekennzeichnet, dass** der optische Sensor (5) als Kamera ausgebildet ist.

10. Mobiler Kommissionierroboter nach einem der Ansprüche 7 bis 9, **dadurch gekennzeichnet, dass** im Bereich des Aufnahmewerkzeugs (3) des Roboterarms (2) ein Projektor angebracht ist, der zur Projektion einer Zielmarkierung auf das Objekt ausgebildet ist und der optische Sensor (5) zur Erfassung dieser Zielmarkierung ausgebildet ist.

## Claims

1. Method for operating a mobile order-picking robot for automatically picking objects, wherein the order-picking robot has a vertically aligned mast (1) and a horizontally aligned robot arm (2) mounted thereon with a pickup tool (3) for picking up the object and a contact location (4) arranged on the pickup tool (3) for making contact with the object, and wherein at least one sensor is used to capture data relating to the position of the pickup tool (3) and, after evaluation of the data in a data processing device, drives for moving the robot arm (2) in the vertical direction (z) relative to the mast (1), for rotating the robot arm (2) in a horizontal plane in the rotation direction (x) about the axis of the mast (1) and for extending the robot arm (2) in the radial direction (y) are controlled such that at least coarse positioning of the pickup tool (3) in the vicinity of the object is performed, wherein at least one optical sensor (5) is used to capture data relating to the position of the contact location (4) of the pickup tool (3) and, after evaluation of the data in the data processing device, at least the drive is controlled for moving the robot arm (2) in the vertical direction (z) such that fine positioning of the contact location (4) is performed, **characterized in that** the data processing device performs speed determination and/or vibration detection from the data of the optical sensor (5) using image correlation and controls mechanisms for vibration compensation and/or for shortening the vibration decay time.

2. Method according to Claim 1, **characterized in that** the data processing device performs distance measurement between the current position and the specified position of the contact location (4) from the data of the optical sensor (5) using image recognition.

3. Method according to Claim 1 or 2, **characterized in that** the data processing device recognizes lifting of the object and a gap between the object and an underlying surface from the data of the optical sensor (5).

4. Method according to Claim 3, **characterized in that** a signal for starting an insertion of a holding apparatus underneath the object is output after a desired gap size has been reached.

5. Method according to one of Claims 1 to 4, **characterized in that** a camera is used as the optical sensor (5).

6. Method according to one of Claims 1 to 5, **characterized in that** a projector is provided in the region of the pickup tool (3) on the robot arm (2) and the projector projects a target mark onto the object and the target mark is captured by the optical sensor (5).

7. Mobile order-picking robot for automatically picking objects, having a vertically aligned mast (1) and a horizontally aligned robot arm (2) mounted thereon with a pickup tool (3) for picking up the object and a contact location (4) arranged on the pickup tool (3) for making contact with the object, wherein the robot arm (2) is designed to be height-adjustable in the vertical direction (z) axially with respect to the mast (1), rotatable in a horizontal plane in the rotation direction (x) about the axis of the mast (1) and extendable in the radial direction (y), and at least one sensor is provided for determining the position of the pickup tool (3), with said sensor being operatively connected to at least one data processing device and to drives for aligning the robot arm in the directions (x,y,z), wherein the at least one sensor is designed at least for coarse positioning of the pickup tool (3) in the vicinity of the object, wherein the order-picking robot has an optical sensor (5) for determining the position of the contact location (4) and the optical sensor (5) is operatively connected to the data processing device and to the drives and is designed for fine positioning of the contact location (4), **characterized in that** the data processing device carries out a method according to one of Claims 1 to 6.

8. Mobile order-picking robot according to Claim 7, **characterized in that** the optical sensor (5) is mounted in the region of the pickup tool (3) of the robot arm (2) .

9. Mobile order-picking robot according to Claim 7 or 8, **characterized in that** the optical sensor (5) is configured as a camera.

10. Mobile order-picking robot according to one of Claims 7 to 9, **characterized in that** a projector that is configured for projecting a target mark onto the object is mounted in the region of the pickup tool (3) of the robot arm (2) and the optical sensor (5) is configured for capturing said target mark.

## Revendications

1. Procédé d'exploitation d'un robot de préparation de commandes mobile destiné à la préparation de commandes automatique d'objets, le robot de préparation de commandes présentant un poteau (1) orienté verticalement et, rattaché à celui-ci, un bras de robot (2) orienté horizontalement muni d'un outil de réception (3) pour recevoir l'objet et d'un point de contact (4) disposé sur l'outil de réception (3) et pour entrer en contact avec l'objet, et dans lequel au moins un capteur détecte des données concernant la position de l'outil de réception (3), et après l'évaluation des données dans un dispositif de traitement de données, des entraînements permettant de régler le bras de robot (2) dans la direction verticale (z) axialement par rapport au poteau (1), de faire tourner le bras de robot (2) dans un plan horizontal dans la direction de rotation (x) autour de l'axe du poteau (1) et pour déployer le bras de robot (2) dans une direction radiale (y) sont pilotés de telle sorte qu'au moins un positionnement approximatif de l'outil de réception (3) est effectué à proximité de l'objet, dans lequel au moins un capteur optique (5) détecte des données concernant la position du point de contact (4) de l'outil de réception (3), et après l'évaluation des données dans le dispositif de traitement de données, au moins l'entraînement permettant de régler le bras de robot (2) dans la direction verticale (z) est piloté de telle sorte qu'un positionnement précis du point de contact (4) est effectué, **caractérisé en ce que** le dispositif de traitement de données effectue selon les données du capteur optique (5), au moyen d'une corrélation d'image, une détermination de vitesse et/ou une détection de vibrations et pilote des mécanismes de compensation de vibrations et/ou de réduction de la durée d'amortissement.

2. Procédé selon la revendication 1, **caractérisé en ce que** le dispositif de traitement de données effectue selon les données du capteur optique (5), au moyen d'une reconnaissance d'image, une mesure de distance entre une position réelle et une position théorique du point de contact (4).

3. Procédé selon la revendication 1 ou 2, **caractérisé en ce que** le dispositif de traitement de données détecte selon les données du capteur optique (5) un soulèvement de l'objet et un intervalle entre l'objet et le support.

4. Procédé selon la revendication 3, **caractérisé en ce qu'**un signal est émis pour démarrer l'insertion d'un dispositif de retenue sous l'objet lorsqu'une dimension d'intervalle souhaitée est atteinte.

5. Procédé selon l'une quelconque des revendications 1 à 4, **caractérisé en ce qu'**une caméra est utilisée comme capteur optique (5).

6. Procédé selon l'une quelconque des revendications 1 à 5, **caractérisé en ce qu'**un projecteur est prévu au niveau de l'outil de réception (3) sur le bras de robot (2) et le projecteur projette un repère de cible sur l'objet et le repère de cible est détecté par le capteur optique (5).

7. Robot de préparation de commandes mobile destiné à la préparation de commandes automatique d'objets, comprenant un poteau (1) orienté verticalement et, rattaché à celui-ci, un bras de robot (2) orienté horizontalement muni d'un outil de réception (3) pour recevoir l'objet et d'un point de contact (4) disposé sur l'outil de réception (3) et pour entrer en contact avec l'objet, dans lequel le bras de robot (2) est réalisé de manière réglable en hauteur dans la direction verticale (z), axialement par rapport au poteau (1), de manière rotative dans un plan horizontal dans la direction de rotation (x) autour l'axe du poteau (1), et de manière déployable dans la direction radiale (y), et au moins un capteur est prévu pour déterminer la position de l'outil de réception (3) et qui est en liaison active avec au moins un dispositif de traitement de données et des entraînements pour orienter le bras de robot dans les directions (x, y, z), ledit au moins un capteur étant conçu au moins pour un positionnement approximatif de l'outil de réception (3) à proximité de l'objet, dans lequel le robot de préparation de commandes présente un capteur optique (5) pour déterminer la position du point de contact (4) et le capteur optique (5) est en liaison active avec le dispositif de traitement de données et les entraînements et est conçu pour un positionnement précis du point de contact (4), **caractérisé en ce que** le dispositif de traitement de données exécute un procédé selon l'une quelconque des revendications 1 à 6.

8. Robot de préparation de commandes mobile selon la revendication 7, **caractérisé en ce que** le capteur optique (5) est rattaché au niveau de l'outil de réception (3) du bras de robot (2).

9. Robot de préparation de commandes mobile selon la revendication 7 ou 8, **caractérisé en ce que** le capteur optique (5) est réalisé sous la forme d'une caméra.

10. Robot de préparation de commandes mobile selon l'une quelconque des revendications 7 à 9, **caractérisé en ce qu'**au niveau de l'outil de réception (3) du bras de robot (2), un projecteur est rattaché qui est réalisé pour projeter un repère de cible sur l'objet, et le capteur optique (5) est réalisé pour détecter ce repère de cible.
